# EUROPEAN PATENT SPECIFICATION

(11) **EP 0 599 603 B1**
(45) Date of publication and mention of the grant of the patent: **19.08.1998**
(21) Application number: 93309331.2
(22) Date of filing: 23.11.1993
(51) Int. Cl.: H01M 4/00, H01M 4/66

(54) **Metal hydride electrode, cell and manufacturing process**
Metalhydridelektrode, Zelle und Verfahren zu ihrer Herstellung
Electrode à hydrure métallique, cellule et procédé de fabrication

(30) Priority: 24.11.1992 US 980845
(43) Date of publication of application: 01.06.1994
(73) Proprietor: EVEREADY BATTERY COMPANY, INC., St. Louis Missouri 63164 (US)
(72) Inventor: Weckesser, John, Gainesville, Florida 32606 (US); Jordan, Gerald, Live Oak, Florida 32606 (US); Citta, Nelson, Gainesville, Florida 32606 (US)
(74) Representative: Lord, Hilton David

(56) References cited:
- EP-A- 0 347 507
- EP-A- 0 402 514
- EP-A- 0 460 425
- GB-A- 2 176 500
- US-A- 4 663 256

## Description

The present invention relates to a metal hydride electrode, a process for the preparation of such an electrode, and the use of a metal hydride electrode in an electrochemical cell.

The negative electrode in a sealed or semi-sealed nickel metal hydride alkaline cell is generally made from or includes a hydrogen storage alloy material as the electrochemically active material. These alloy materials are believed to possess catalytically active sites for the dissociation of hydrogen molecules, thereby increasing the rate at which hydrogen absorption and desorportion can be accomplished. Cells which contain a negative electrode made from such hydrogen storage alloy materials typically also include a nickel positive electrode and an alkaline electrolyte in a sealed configuration. The resulting cell operates in some respects in a manner similar to a nickelcadmium cell.

Metal hydride electrodes commonly available are generally of the pasted or compressed powder type. In an electrode of the pasted type the active material adheres well to the current collector substrate by virtue of the presence of organic binders, such as polyacrylate and polytetrafluoroethylene. However, the pasting process used to prepare such electrodes results in a reduction of the volumetric energy density. This has been attributed to the addition of the binder, which creates inherently higher porosities, typically of the order of 35 percent. Pressed powder metal hydride electrodes on the other hand, typically using wire mesh or metallic foam substrates, offer an increase in energy density, as well as lower porosities. However, these electrodes suffer from the tendency of the woven wire and foam edges to form electrical short circuits through the separator to the other electrode, i.e. that having the opposite polarity. Moreover, the nickel wire screen and foam substrates which are typically used in these constructs are relatively expensive. Furthermore, electrodes including a wire screen require an additional manufacturing step, that is sintering the electrode in a non-oxidising atmosphere at temperatures sufficiently high to promote particle-to-particle bonding and bonding of the alloy powder to the current collector, for example as described in U.S. Patent No. 4,820,481.

EP-A-0402514 discloses fabrication of an electrode for a Ni-Cd electrochemical cell by sintering nickel powder onto a smooth steel substrate, optionally perforated, in order to increase both the surface area and adhesion of subsequently deposited cobalt or cadmium.

US-A-4663256 discloses a method for increasing the surface area of electrically conductive substrates by electrodeposition of nickel dendrites. Spraying of the surface is also mentioned.

It has been found that it is not possible to combine these two forms of electrode, that is to compact a powder metal hydride alloy directly onto a cheaper substrate. Therefore, there is presently no method described in the art for the production of a metal hydride electrode of high density and low porosity, by the direct compaction of a powder metal hydride alloy onto a less expensive substrate, that is a substrate which has a reduced tendency to create shorts in a cell, for example a nickel plated perforated steel foil strip.

There is, therefore, a need in the art for a metal hydride electrode of superior energy density and mechanical integrity, which electrode is comparatively cheap to manufacture, employing relatively inexpensive current collector substrate materials to which the alloy powders will not normally adhere in the compaction process and which have a reduced tendency to cause electrical short circuits during use of the cell.

In a first aspect, the present invention provides a metal hydride electrode for use in an alkaline electrochemical cell prepared by a process comprising the steps of:
providing a conductive core substrate strip whose surface is generally smooth and to which electrochemically active hydrogen storage alloy does not strongly adhere;
modifying the surface of the strip to convert the generally smooth surface to an irregularly surfaced electrically conductive bonding layer; and
compressing a layer of sufficient thickness of electrochemically active hydrogen storage alloy material against the bonding layer so as to adhere the alloy material to the modified substrate strip, thereby to provide a distinct layer.

In a particular embodiment, the present invention is directed towards providing a metal hydride electrode of the compacted type for use in an alkaline electrochemical cell, including a conductive core substrate having a generally smooth surface to which electrochemically active hydrogen storage alloy material does not strongly adhere (upon direct compaction against the substrate) the surface of the core substrate having been modified by carrying thereon an irregularly surfaced conductive bonding layer, and a layer of electrochemically active hydrogen storage alloy material capable of reversibly storing hydrogen compacted against and adhered to the so-modified substrate.

In a further aspect the present invention provides an alkaline electrochemical cell including a metal hydride negative electrode substantially as hereinabove defined.

The present invention is further illustrated by the accompanying drawings, in which:
Figure 1 is a side elevational, partially broken-away, view of an electrode constructed in accordance with the invention;
Figure 2 is a schematic partial sectional view of the electrode taken along 2-2 of Figure 1;
Figure 3 is an enlarged schematic partial sectional view of the electrode taken along 3-3 of Figure 2; and
Figure 4 is a schematic process flow diagram illustrating one means for producing the electrode of the invention.

The metal hydride electrode prepared by the present invention is particularly useful as the negative electrode of a cell. The electrode may be incorporated in any type of cell, for example in a sealed alkaline cell, such as a hermetically sealed cell or a cell equipped with a resealable safety valve, or in a semi-sealed or flooded cell. We particularly prefer that the electrode is used in a sealed alkaline cell.

When forming the negative electrode of a cell, the metal hydride electrode of the present invention may be matched in a cell against any suitable positive electrode and the choice of such positive electrode is not essential to the present invention. If, for example, the metal hydride electrode of the invention is incorporated into a sealed alkaline cell, it may be matched against a nickel counter positive electrode.

The electrode of the present invention possesses sufficient flexibility for winding to form electrode roll cell packs for standard cylindrical cells such as the AA, C and D-size cells. However, the final character of the cell comprising the electrode of the invention is not essential to the present invention, and we have found that the electrode may be included in any cell, such as a prismatic cell, a button cell or a wound cell, as hereinabove described.

The electrode of the present invention includes an inner conductive core substrate having a substantially smooth surface. The material of the core substrate is suitably one to which the electrochemically active hydrogen storage alloy material does not normally completely adhere upon compaction. There may be some adherence between the hydrogen storage alloy material and the material of the core substrate, but it is preferred that this adherence is not strong. Suitable materials for the core substrate include steel or plated steel, such as nickel-plated steel.

The surface of the core substrate is substantially smooth. By smooth, in this context, is meant that the surface of the substrate is substantially regular to the naked eye and of low surface area per unit of area of substrate face. The surface of the core substrate may, if desired, include perforations, for example a plurality of perforations, which serve to improve electrode integrity and electrolyte transfer within the electrode.

As hereinabove mentioned, the surface of the core substrate may, if desired, be plated. Plating may be desirable for electrochemical reasons, for example if normally forming a local couple with the electrolyte so as to generate undesirable gassing. Suitable materials for plating include nickel of relatively high hydrogen overvoltage. Alternatively, when modification of the core substrate involves addition of a modifying layer, as discussed hereinbelow, the modifying layer may be so chosen as to provide protection against gassing.

The smooth surface of the core substrate of the electrode of the present invention is modified to form an irregularly surfaced conductive bonding layer. The modification of the surface of the core substrate results in a surface having a higher surface area and results in the production of a conductive particulate matrix. Modification may, if desired, be by direct treatment of the surface of the core substrate, for example by roughening of a surface by sandblasting or electrochemical etching of the surface or the like, or modification may be provided by the addition of a distinct conductive bonding layer to a smooth surface of the core substrate. Typically such layers include a layer of metallic or other conductive particles applied, for example, by spray coating, or a layer of porous metal particles, such as a thin sintered layer of porous nickel particles, applied to a smooth surface of the core substrate or a dendritic surface layer of, for example, nickel or other conductive particles.

If modification of the core substrate involves the addition of a distinct layer of a material to the core substrate, the added layer may be of any suitable thickness. However, it is preferred that the layer added is thin in comparison to the overall thickness of the finished electrode.

The formation of an irregularly surfaced conductive layer on the core substrate enables, as discussed hereinabove, the electrochemically active hydrogen storage alloy material to be bonded to the core substrate. In general, therefore, it is necessary only to modify sufficient of the surface of the core substrate to enable such bonding. In particular, however, when forming a distinct conductive layer on the core substrate, it is preferred that such layer is formed on each major face of the core substrate.

When using a thin sintered layer of conductive particles, it is preferred that the layer will have a porosity of from 75 to 99%. It is furthermore preferred that the layer will have a pore size which accepts at least a portion of the electrochemically active hydrogen storage alloy material in its pore structure upon compaction of the active material against the modified core substrate. A sintered layer of this type can be applied to the core substrate using techniques known in the art and summarised hereinafter.

When using a dendritic layer of, for example, nickel or other conductive particles, this layer is suitably applied to the core substrate by electroplating or electroless plating.

In the electrode of the present invention, the outer layer is formed from a layer of an electrochemically active hydrogen storage alloy material. This material should be so chosen as to be capable of reversibly storing and occluding hydrogen. The choice of active material is not essential to the present invention, and we have found generally that any electrochemically active material may be used. Typical alloys include the so-called AB₂ type as disclosed, for instance, in U.S. Patent Nos. 4,431,561 (Ovshinsky et al.) and 4.716,088 (Reichman et al.). The preferred ABxxx type materials, as currently envisioned, are based on TiNi₂ and typically have the basic atomic structure Ni-Ti-V-Cr-Zr-X-Y, where X and Y can be other elements of various selection. The invention also applies to hydrogen storage alloy materials of the so-called AB₅ type, a common example of which is described by the basic formula MmNiᵣCoₛMnₜAlᵤ, wherein Mm represents a lanthanum-rich mischmetal, which includes various rare earth metals, and wherein 2.5 ≤ r ≤ 5.0, 0 ≤ s ≤ 2.5, 0 ≤ t ≤ 0.5, and 0 ≤ u ≤ 0.5. Hydrogen absorbing alloys of this class are disclosed, for instance, in U.S. Patent Nos.4,216,274 (Bruning et al.). and 4,375,257 (Bruning et al.). Hybrid AB₂/AB₅ alloys may also be used and the foregoing formulae may include metallic constituent elements in addition to or as substitutes for the listed elements.

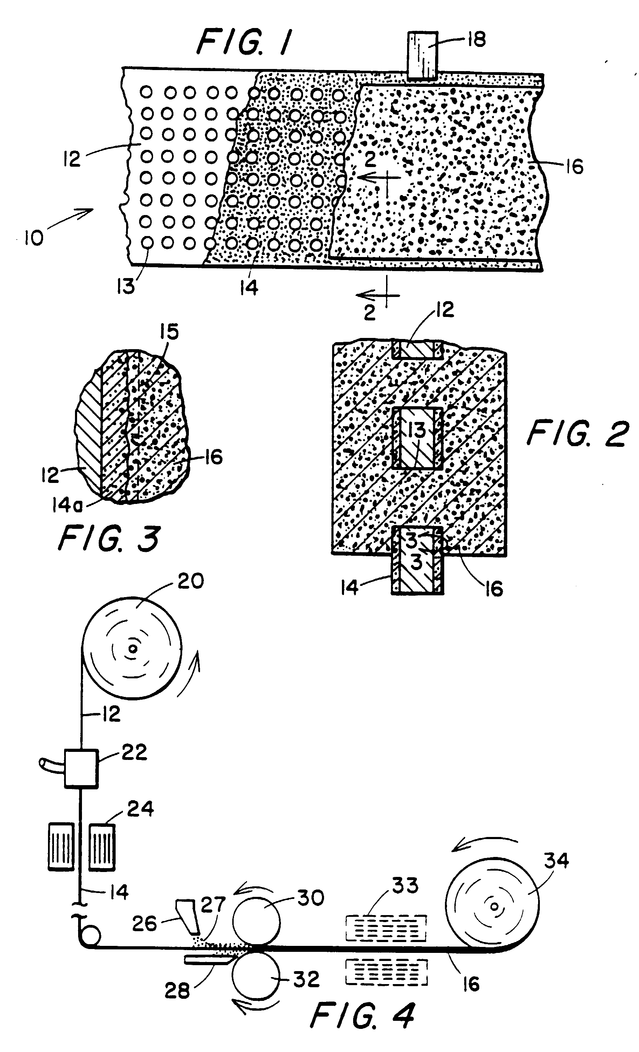

Referring to Figures 1, 2 and 3, the compacted metal hydride negative electrode plate of the invention is shown generally at 10 and includes a conductive core substrate 12, an irregularly surfaced conductive bonding layer 14, and a layer of electrochemically active hydrogen storage alloy material 16 adhered to the modified substrate, and preferably providing a distinct layer of active material covering both major surfaces of bonding layer 14. In standard fashion electrode 10 may be provided with a current collector tab 18 for delivering current to the negative terminal of a cell (not shown) employing the electrode. A wound cell configuration which may be used as the cell configuration of this invention (however substituting the metal hydride electorode of this invention for the cadmium electrode disclosed in the following patent) is disclosed by Rampel et. al. in U.S. Patent No. 5,064,735.

Core substrate 12 in accordance with the invention has a generally smooth surface to which the electrochemically active hydrogen storage alloy material does not normally, i.e., strongly, adhere, upon compaction.

In accordance with the invention the generally smooth surface of core substrate 12 is modified to possess an irregularly surfaced, i.e., higher surface area, conductive bonding layer 14 thereon. Modification may be as discussed above.

If layer 14 is formed of a relatively soft porous structure of sintered nickel, or dendritic electroplated nickel, it is envisioned, depending upon compaction pressure and other parameters, that the pressing operation will cause the irregularly surfaced conductive bonding layer 14 to be compressed from its normal thickness shown at 15, Figure 3, to the reduced thickness shown at 14a. It is thought that such compression causes the porous particles of the conductive bonding layer to further encompass and intermingle with the particles of active material layer 16, capturing such particles in a mechanical bonding relationship.

The preferred thin sinter and electroplated dendritic surface layers 14 are believed to act somewhat like a "velcro" surface in their ability to intermingle and capture the active material particles within their irregularly surfaced porous network.

By providing layer 14 as a conductive particulate matrix, the connection with the primary current collector substrate 12 is also believed to be enhanced, resulting in lowered impedance, making the electrode suitable for high discharge rate service.

Active material layer 16 is formed of an electrochemically active hydrogen storage alloy material capable of reversibly storing or occluding hydrogen.

To achieve maximum electrode density, and hence lowest porosities, it is preferred that the electrochemically active material be applied as a dry powder substantially free of organic or other binders. Dry compacted electrodes in accordance with the invention typically have porosities in the range of from about 10 to about 40%, more preferably of from about 10 to about 25%. Alternatively, minimal amounts of binder may be employed, particularly if blended with the active material as dry binder powder or particles. An example of such a binder is polytetrafluoroethylene (Teflon^{TM}).

The present invention also provides a method for the production of an electrode, as hereinabove defined, for use in an electrochemical cell which method comprises compressing a layer of an electrochemically active hydrogen storage material to an electrically conductive irregular surface of a conductive core substrate.

Preferably, this method comprises providing a conductive core substrate strip whose surface is generally smooth and to which electrochemically active hydrogen storage alloy material does not strongly adhere, modifying the surface of the strip to convert the generally smooth surface to an irregularly surfaced electrically conductive bonding layer, and compressing a layer, of sufficient thickness, of electrochemically active hydrogen storage alloy material against the bonding layer so as to adhere the alloy material to the modified substrate strip, and to provide a distinct layer of active material covering the surface of the bonding layer.

Referring to Figure 4, a preferred method of producing the electrode of the invention employing a layer 14 of thin sintered nickel particles serving as the irregularly surfaced conductive bonding layer adhered to substrate 12, is shown. From supply roll 20 a continuous strip of conductive core substrate 12 formed of nickel plated perforated steel is passed through coating applicator 22 where a slurry of conductive particles is extrusion coated on both sides of strip 12. A typical slurry composition which may be employed includes carbonyl nickel powder e.g. Inco-Nickel 255, having a particle size (Fisher subsieve) ranging from about 2.2 to about 3.0 µm and a surface area from about 0.68 to about 0.70 m²/g, suspended in a vehicle. The vehicle is preferably formed from an aqueous solution of carboxymethyl cellulose (CMC) binder. The extrusion die is adjusted to provide a coating of the slurry which is thin compared to the thickness of substrate 12, on both major faces thereof. The thus coated substrate is thereafter fed to a sintering furnace 24 typically at a temperature from about 900 to 1,200 °C causing the nickel particles to sinter, and to drive off the vehicle and binder used in the sintering slurry.

At this point the conductive substrate so modified by application of the porous thin sinter layer on each surface thereof may be taken up on a roll and stored, for further processing as needed. Alternatively, by adjusting the flow-through rate, the process may be made continuous by passing the modified (thin sinter) substrate directly to the powder dispensing station 26. In either case, the modified substrate 14 passes next to a powder dispenser 26 whereby the metal hydride alloy in powdered form 27 is dispensed in measured amounts onto the surface of the modified substrate. In this respect, it is preferred to employ a shoe or trough 28 located adjacent to the nip of calendaring compaction rolls 30, 32, and at a predetermined spacing beneath the substrate, so as to present a correctly determined volume of active material powder adjacent the underside of the traveling substrate. It will be understood that a similar layer of metered active material of desired thickness will also be dispensed onto the upper surface of the traveling substrate, and the thus covered substrate will enter the nip of rolls 30 and 32 and be compacted against the substrate with suitable force of preferably at least about 3 tons, more preferably at least about 15 tons per 2.54 cm (inch) of width of the substrate, depending upon the desired alloy density and electrode porosity. Alternatively other compaction methods may be used e.g. flat pressing.

Following compaction of the powdered active material to the modified core substrate, the electrode with juxtaposed active surface layers 16 compressed on each face of the modified substrate, may be taken up on roll 34 for further processing into a completed electrochemical cell. Alternatively, the thus compacted electrode may be heat treated e.g. annealed, by passing the compacted substrate through annealing furnace 33 operating preferably at a temperature of from about 600 to about 900°C. The annealing operation improves the mechanical integrity of the electrode and increases its ductility and suppleness. Another suitable heat treating operation, to achieve particle-to-particle bonding (if desired), is effected by sintering the precursor electrode at a temperature above about 900°C.

The electrochemiclly active hydrogen storage alloy material 27 may be produced, in the case of AB₅ alloys, by a simple mechanical grinding operation. For instance, the alloy may be introduced into jaw crushers followed by rotary grinders in an inert atmosphere, e.g., argon or nitrogen, to reduce the average particle size down to about 5 to about 100 µm typically. In the case of AB₂ alloys, the process of hydride/dehydride grinding disclosed in U.S. Patent No. 4,820,481 may be advantageously employed.

In a final aspect, the present invention also provides the use of an electrode as hereinabove defined as negative electrode in an electrochemical cell.

The individual components of the cell including the electrode of the present invention, for example the can, electrolyte and seal, are all well known and commonly available to the man skilled in the art. Furthermore, techniques for the assembly of such a cell are familiar to the man skilled in the art. As hereinabove discussed, the electrode of the present invention is suitable for incorporation in any type of cell and the choice of cell is not essential to the present invention.

### Example

To compact metal hydride alloy material onto perforated metal substrate, the substrate was first coated with a thin layer of nickel powder to provide a high surface area substrate. The nickel powder was applied by preparing a slurry whose formulation was 15 % by weight of Inco Nickel 255, 2 % by weight of CMC binder and 83 % by weight of water. The slurry was then applied onto both sides of a nickel plated perforated steel substrate (0.002 inch / 0.005 cm thick) using a doctor blade coating technique, while maintaining minimal thickness. The slurry coated material was then dried in an infrared oven, after which it was sintered at a temperature of 1,025°C to assure bonding of the nickel to the substrate. The belt speed through the sintering furnace was three feet per minute (0.914 m/minute). The thickness of the substrate with a thin nickel coating sintered to it was approximately 0.007 inches (0.0175 cm).

The substrate material described above was slit to 1.630 inches (4 cm) in width. Metal hydride alloy of the type, AB₅, having an atomic formula of where MmNi_{3.6}Co_{0.7}Mn_{0.3}Al_{0.4} is a lanthanum-rich misch-metal, was compacted onto the modified substrate using a two high vertical mill with calendering rolls of 5.875 inches (14.69 cm) in diameter and eight inches (20 cm) in width. The modified substrate was passed though a "shoe" extending to the nip of the calendering rollers. This shoe contained binderless metal hydride alloy powder, which was picked up by the modified substrate, and metered via a wiper blade prior to entering the nip of the calendering rolls. Approximately 120,000 lbs (54,431 Kg) of force were exerted at the rolls i.e. around 35 tons per inch of width (1.016 tonnes per 2.5 cm) of modified substrate. The modified substrate was fed through the mill at a rate of approximately six feet per minute (1.83 m/minute). Finished electrodes prepared by this method had coated weights of 12 to 14 g of metal hydride alloy per square decimeter of electrode surface area and electrode thicknesses approximately 0.011 inches (0.0275 cm).

Metal hydride electrodes, prepared in this manner, were matched with sintered nickel electrodes, whose dimensions were 0.021 inches (0.0525 cm) in thickness and 1.630 inches (4 cm) in width, and wound in a jellyroll configuration to achieve an electrode spacing of approximately 0.006 inches (0.015 cm) in an AA cell size. A non-woven polypropylene separator was used. The cells, two in number, were filled with 2.5 g of a potassium hydroxide-lithium hydroxide electrolyte mixture. The nominal design capacity of these cells was 1.050 mAh.

Cycle life evaluation was performed. The cells were charged at a current of 1 Amp to an ambient temperature cutoff of 45 °C. After a two-minute rest period, cells were discharged at 1 Amp to a voltage cutoff of 1.0 Volt. A one-hour rest followed each discharge cycle. The cells cycled according to this regimen surpassed 700 cycles prior to test termination. The capacity of the cells at termination was about 1,000 mAh and the cells exhibited a voltage of about 1.15 Volts.

## Claims

1. A metal hydride electrode (10) for use in an alkaline electrochemical cell prepared by a process comprising the steps of:
providing a conductive core substrate strip (12) whose surface is generally smooth and to which electrochemically active hydrogen storage alloy does not strongly adhere;
modifying the surface of the strip to convert the generally smooth surface to an irregularly surfaced electrically conductive bonding layer (14); and
compressing a layer of sufficient thickness of electrochemically active hydrogen storage alloy material (16) against the bonding layer (14) so as to adhere the alloy material to the modified substrate strip, thereby to provide a distinct layer.

2. An electrode according to Claim 1, wherein the material of the core substrate (12) is such that the electrochemically active hydrogen storage alloy material (16) does not normally adhere.

3. An electrode according to Claim 1 or Claim 2, wherein a distinct bonding layer (14) is applied to the core substrate (12), thereby providing the irregularly surfaced conductive bonding layer (14).

4. An electrode according to Claim 3, wherein the layer of alloy material (16) is thin relative to the thickness of the final electrode (10).

5. An electrode according to Claim 4, wherein the porosity of the electrode (10) is from about 10 to about 40%.

6. An electrode according to Claim 5 wherein the porosity of the electrode (10) is from abut 10 to about 25%.

7. An electrode according to any preceding claim substantially free of organic binder.

8. An electrode according to Claim 7, wherein the core substrate (12) is formed of nickel coated perforated steel strip.

9. An electrode according to Claim 8, wherein the irregularly surfaced bonding layer (14) is formed of a porous sintered nickel network.

10. A method for the preparation of a metal hydride electrode (10) as defined in any one of Claims 1 to 9 for use in an alkaline electrochemical cell, which method comprises compressing a layer of an electrochemically active hydrogen storage alloy material (16) to an electrically conductive irregular surface (14) of a conductive core substrate (12).

11. A method according to Claim 10, wherein the irregular surface (14) of the conductive core substrate (12) is formed by applying a slurry of conductive particles to a conductive core substrate (12) having a smooth surface, and sintering the slurry to form a porous sintered conductive layer (14).

12. A method according to Claim 10, wherein the irregular surface of the conductive core substrate is formed by electroplating a conductive core substrate having a smooth surface to form a dendritic particle layer on the core substrate.

13. A method according to any one of Claims 10 to 12, wherein the alloy material is in powder form, free of liquid carrier.

14. A method according to Claim 13, wherein the alloy material is substantially free of organic binder.

15. The use of an electrode as defined in any one of Claims 1 to 9 in an electrochemical cell.

16. An alkaline electrochemical cell comprising a nickel positive electrode, a metal hydride negative electrode as defined in any one of Claims 1 to 9, a porous separator interposed between the positive and negative electrodes, and an alkaline electrolyte.

## Patentansprüche

1. Aus einem Metallhydrid bestehende Elektrode (10), die zur Anwendung in einer alkalischen elektrochemischen Zelle bestimmt ist und die über ein Verfahren hergestellt wird, welches die nachfolgenden Schritten umfaßt:
ein Bereitstellen eines Bandes eines leitfähigen Kernsubstrates (12), welches eine im allgemeinen glatte Oberfläche aufweist und an welchem eine elektrochemisch aktive, Wasserstoff speichernde Legierung nicht fest anhaftet;
ein Modifizieren der Oberfläche des Bandes um die im allgemeinen glatte Oberfläche in eine an der Oberfläche unregelmäßig beschaffene, elektrisch leitfähige Bindungsschicht (14) zu verwandeln; und
ein Zusammendrücken einer Schicht von einer genügenden Dicke aus einem elektrochemisch aktiven, Wasserstoff speichernden Legierungsmaterial (16) gegen die Bindungsschicht (14), so daß das Legierungsmaterial an dem modifizierten Band des Substrates haftet, um auf diese Weise eine getrennte Schicht zu schaffen.

2. Elektrode gemäß Patentanspruch 1, bei welcher das Material des Kernsubstrats (12) so ausgebildet ist, daß das elektrochemisch aktive, Wasserstoff speichernde Legierungsmaterial (16) normalerweise nicht fest anhaftet.

3. Elektrode gemäß Patentanspruch 1 oder Patentanspruch 2, bei welcher eine getrennte Bindungsschicht (14) auf das Kernsubstrat (12) aufgebracht wird, und so eine an der Oberfläche uneinheitlich beschaffene, leitfähige Bindungsschicht (14) ergibt.

4. Elektrode gemäß Patentanspruch 3, bei welcher die Schicht des Legierungsmaterials (16) dünn ist im Vergleich zu der Dicke der endgültigen Elektrode (10).

5. Elektrode gemäß Patentanspruch 4, bei welcher die Porosität der Elektrode (10) zwischen etwa 10 und etwa 40% liegt.

6. Elektrode gemäß Patentanspruch 5, bei welcher die Porosität der Elektrode (10) zwischen etwa 10 und etwa 25% liegt.

7. Elektrode gemäß irgendeinem der vorhergehenden Ansprüche, welche im wesentlichen frei von einem organischen Bindemittel ist.

8. Elektrode gemäß Patentanspruch 7, bei welcher das Kernsubstrat (12) von einem durchlöcherten mit Nickel überzogenen Stahlband gebildet wird.

9. Elektrode gemäß Patentanspruch 8, bei welcher die an der Oberfläche unregelmäßige, leitfähige Bindungsschicht (14) von einem porösen, gesinterten Netzwerk aus Nickel gebildet wird.

10. Verfahren zur Herstellung einer aus einem Metallhydrid bestehenden Elektrode (10), wie sie in irgendeinem der Ansprüche 1 bis 9 definiert worden ist und zur Anwendung in einer alkalischen elektrochemischen Zelle bestimmt ist, wobei das Verfahren ein Zusammendrücken einer Schicht eines elektrochemisch aktiven, Wasserstoff speichernden Legierungsmaterials (16) mit einer elektrisch leitfähigen, unregelmäßigen Oberfläche (14) eines leitfähigen Kernsubstrats (12) beinhaltet.

11. Verfahren gemäß Patentanspruch 10, bei welchem die unregelmäßige Oberfläche (14) des leitfähigen Kernsubstrats (12) geschaffen wird durch Aufbringung eines Schlammes aus leitfähigen Partikeln auf ein leitfähiges Kernsubstrat (12) mit einer glatten Oberfläche, und durch Sintern des Schlammes, so daß eine poröse, gesinterte, leitfähige Schicht (14) gebildet wird.

12. Verfahren gemäß Patentanspruch 10, bei welchem die unregelmäßige Oberfläche des leitfähigen Kernsubstrates dadurch geschaffen wird, daß ein leitfähiges Kernsubstrat mit einer glatten Oberfläche derart elektroplattiert wird, daß auf dem Kernsubstrat eine dendritische Partikelschicht gebildet wird.

13. Verfahren gemäß irgendeinem der Ansprüche 10 bis 12, bei welchem das Legierungsmaterial in Pulverform, frei von einem flüssigen Trägermaterial, vorliegt.

14. Verfahren gemäß Patentanspruch 13, bei welchem das Legierungsmaterial im wesentlichen frei von einem organischen Bindematerial ist.

15. Gebrauch einer Elektrode, wie sie in irgendeinem der Ansprüche 1 bis 9 definiert worden ist, in einer elektrochemischen Zelle.

16. Alkalische elektrochemische Zelle mit einer positiven Elektrode aus Nickel, einer negativen Elektrode aus Metallhydrid, so wie sie in irgendeinem der Ansprüche 1 bis 9 definiert worden ist, einem porösen zwischen der positiven Elektrode und der negativen Elektrode eingelegten Trennelement, und einem alkalischen Elektrolyten.

## Revendications

1. Electrode à hydrure de métal (10), destinée à l'usage dans une pile électrochimique alcaline et préparée par un procédé qui comprend les étapes consistant:
à pourvoir à un feuillard d'un substrat de base conducteur (12) dont la surface est généralement lisse et à laquelle un alliage, électrochimiquement actif, à stockage d'hydrogène n'adhère pas fermement;
à modifier la surface du feuillard pour convertir la surface généralement lisse en une couche de liaison électriquement conductrice à surface irrégulièrement usinée (14); et
à comprimer une couche d'une épaisseur suffisante de matériau allié, électrochimiquement actif, à stockage d'hydrogène (16) contre la couche de liaison (14), de telle sorte à faire adhérer le matériau allié au feuillard modifié du substrat pour fournir de cette façon une couche distincte.

2. Electrode suivant revendication 1, dans laquelle le matériau du substrat de base (12) est tel que le matériau allié, électrochimiquement actif, à stockage d'hydrogène (16) n'y adhère pas normalement.

3. Electrode suivant revendication 1 ou revendication 2, dans laquelle une couche de liaison (14) distincte est appliquée sur le substrat de base (12), ce qui procure la couche de liaison conductrice à surface irrégulièrement usinée (14).

4. Electrode suivant revendication 3, dans laquelle la couche de matériau allié (16) est mince par rapport à l'épaisseur de l'électrode finale (10).

5. Electrode suivant revendication 4, dans laquelle la porosité de l'électrode (10) est comprise entre environ 10 et environ 40%.

6. Electrode suivant revendication 5, dans laquelle la porosité de l'électrode (10) est comprise entre environ 10 et environ 25%.

7. Electrode suivant l'une quelconque revendication précédente, qui est, pour l'essentiel, exempte de liant organique.

8. Electrode suivant revendication 7, dans laquelle le substrat de base (12) est formé d'une bande en acier perforée, revêtue de nickel.

9. Electrode suivant revendication 8, dans laquelle la couche de liaison à surface irrégulièrement usinée (14) est formée d'un réseau de nickel aggloméré poreux.

10. Procédé pour la préparation d'une électrode à hydrure de métal (10), telle que définie dans l'une quelconque des revendications 1 à 9, pour l'utilisation dans une pile électrochimique alcaline, le procédé comprenant la compression d'une couche d'un matériau allié, électrochimiquement actif, à stockage d'hydrogène (16) contre une surface irrégulière électriquement conductrice (14) d'un substrat de base conducteur (12).

11. Procédé suivant revendication 10, dans lequel la surface irrégulière (14) du substrat de base conducteur (12) est formée en appliquant une boue de particules conductrices sur un substrat de base conducteur (12) ayant une surface lisse, et en agglomérant la boue pour former une couche conductrice agglomérée poreuse (14).

12. Procédé suivant revendication 10, dans lequel la surface irrégulière du substrat de base conducteur est formée en soumettant à l'électroplacage un substrat de base conducteur ayant une surface lisse pour former une couche de particules dendritiques sur le substrat de base.

13. Procédé suivant l'une quelconque des revendications 10 à 12, dans lequel le matériau allié se trouve sous forme de poudre et est exempt de vecteur liquide.

14. Procédé suivant revendication 13, dans lequel le matériau allié est, pour l'essentiel, exempt de liant organique.

15. L'usage d'une électrode telle que définie dans l'une quelconque des revendications 1 à 9 dans une pile électrochimique.

16. Une pile électrochimique alcaline comprenant une électrode positive en nickel, une électrode négative en hydrure de métal, telle que définie dans l'une quelconque des revendications 1 à 9, un séparateur poreux interposé entre l'électrode positive et l'électrode négative, et un électrolyte alcalin.
